Europäisches Patentamt

European Patent Office

Office européen des brevets

(11) Veröffentlichungsnummer : **0 156 985**
**B1**

# (12) EUROPÄISCHE PATENTSCHRIFT

(45) Veröffentlichungstag der Patentschrift :
04.03.87

(21) Anmeldenummer : 84115449.5

(22) Anmeldetag : 15.12.81

(60) Veröffentlichungsnummer der früheren Anmeldung
nach Art. 76 EPÜ : 0054882

(51) Int. Cl.⁴ : **B 60 D   1/14,** B 62 D 53/04,
B 60 D   1/06

(54) **Kupplungsverbindung zwischen einem Zugfahrzeug und einem Anhänger, vorzugsweise Einachsanhänger.**

(30) Priorität : 19.12.80 DE 3048118

(43) Veröffentlichungstag der Anmeldung :
09.10.85 Patentblatt 85/41

(45) Bekanntmachung des Hinweises auf die Patenterteilung : 04.03.87 Patentblatt 87/10

(84) Benannte Vertragsstaaten :
AT BE DE FR GB IT NL SE

(56) Entgegenhaltungen :
FR-A-  2 350 977
GB-A-   181 251
US-A-  3 787 068
US-A-  4 019 754
US-A-  4 106 794

(73) Patentinhaber : Alois Kober KG, Maschinenfabrik
Ichenhauserstrasse 14
D-8871 Kötz 2 (DE)

(72) Erfinder : Kober, Kurt
Am Sandberg 2
D-8871 Kötz 1 (DE)
Erfinder : Wöhrle, Rudolf, Dipl.-Ing.
Kirchstrasse 2
D-8873 Ichenhausen-Rieden (DE)
Erfinder : Köhler, Robert, Ing. grad.
Kemnat 126 b
D-8877 Burtenbach (DE)

(74) Vertreter : Ernicke, Hans-Dieter, Dipl.-Ing.
Schwibbogenplatz 2b
D-8900 Augsburg (DE)

## Beschreibung

Die Erfindung bezieht sich auf eine Kupplungsverbindung zwischen einem Zugfahrzeug und einem Anhänger, vorzugsweise Einachsanhänger mit einer Anordnung zum Verlegen des effektiven Anlenkpunktes in Richtung zum Schwerpunkt des Zugfahrzeuges, bestehend aus zwei beidseits der Gespannlängsachse angeordneten, das Zugfahrzeug mit dem Anhänger verbindenden und eine Viergelenkkette bildenden Lenkern, deren dem Zugfahrzeug zugeordneten Gelenke voneinander einen geringeren Abstand als deren dem Anhänger zugeordneten Gelenke aufweisen.

Solchen Kupplungsverbindungen liegt der Gedanke zugrunde, das Entstehen von Schwänzelbewegungen des Anhängers (gemeint ist damit eine oszillierende Drehbewegung des Anhängers um eine vertikale Achse) zu erschweren.

Die US-A-3 787 068 offenbart hierzu, zwei Deichselstangen an den beiden vorderen Rahmenecken des Anhängers zu lagern und deren andere Enden in einem solchen Abstand voneinander an Kugelgelenken des Zugfahrzeuges aufzunehmen, daß der Schnittpunkt der Deichselstangen-Verlängerungen noch vor der Hinterachse des Zugfahrzeuges nahe dessen Schwerpunktes zu liegen kommt.

Die US-A-4 106 794 offenbart die Anordnung von insgesamt vier solchen Deichselstangen, die paarweise mit Abstand übereinander angeordnet sind. Die Verlängerungen der Deichselstangen schneiden sich hierbei in der Hinterachsebene des Zugfahrzeuges.

Durch die US-A-4 019 754 ist es bekannt, verhältnismäßig kurze Deichselstangen in Form von Lenkern zwischen Querträgern anzuordnen und an ihnen kreuzgelenkartig zu lagern. Die Querträger sind ihrerseits mit starren Kupplungsstangen des Zugfahrzeuges und des Anhängers festverbunden. Auch bei dieser Kupplungsverbindung sind insgesamt vier Lenker vorhanden, von denen jeweils die beiden übereinander liegenden Lenker ein Lenkerpaar bilden und gelenkig an vertikalen Stangen angeschlossen sind, die ihrerseits an den Querträgern um vertikale Achse drehbar gelagert sind.

Der Nachteil dieser bekannten Kupplungsverbindungen besteht darin, daß Zugfahrzeuge und Anhänger speziell ausgerüstet sein müssen, um die Lenker und deren Lagerungen aufzunehmen. Ganz abgesehen davon, daß die Zulassung solcher speziell ausgerüsteter Fahrzeuge erhebliche Schwierigkeiten bereitet, ist das Ankuppeln und Abkuppeln der Anhänger mit erheblichem Arbeitsaufwand und komplizierten Manipulationen verbunden, die den technisch nicht gebildeten Fahrzeugbesitzern kaum zuzumuten sind.

Dieser Nachteil wird durch den Gegenstand der Patentschrift EP-B-0 054 882 (frühere Anmeldung nach Art. 76 EPÜ) beseitigt.

Beim gesamten Stand der Technik sind die Lenker als geradlinige Zugstangen ausgebildet, die zueinander im spitzen Winkel stehen. Dies hat zur Folge, daß der Einschlagwinkel des Zugfahrzeuges gegenüber dem Anhänger ziemlich begrenzt und damit die Fahrtüchtigkeit stark eingeengt ist.

Der Erfindung liegt daher die Aufgabe zugrunde, die Kupplungsverbindung so auszubilden, daß der Einschlagwinkel des Zugfahrzeuges gegenüber dem Anhänger wesentlich vergrößert werden kann, wobei aber deren Abstand voneinander so minimal wie möglich gehalten werden soll.

Diese Aufgabe wird erfindungsgemäß dadurch gelöst, daß die Lenker als nach außen auskragende Winkelhebel bzw. entsprechend gekrümmte Hebel ausgebildet sind. Dabei empfiehlt es sich, die zugfahrzeugseitig angelenkten Schenkel der Winkelhebel länger als die anhängerseitigen Schenkel auszubilden. Außerdem können die längeren Schenkel der Winkelhebel eine größere Länge als der Abstand zwischen den zugfahrzeugseitigen Gelenken besitzen. Ein mit der erfindungsgemäßen Kupplungsverbindung ausgerüstetes Anhängergespann kann mühelos die im Verkehr gegebenen engen Kurven oder Abbiegungen durchfahren, weil der Einschlagwinkel des Zugfahrzeuges gegenüber der Gespannlängsachse bis etwa 60° betragen kann.

Ausführungsbeispiele der Erfindung sind in der Zeichnung schematisch und beispielsweise dargestellt. Es zeigen :

Figur 1 eine Draufsicht auf ein Zugfahrzeug mit Anhänger und einer Kupplungsanordnung mit Winkelhebel-Lenkern,

Figur 2 eine Draufsicht auf die Anordnung gemäß Fig. 1 mit Sichelhebel-Lenkern und

Figur 3 eine Draufsicht auf die Anordnung gemäß Fig. 2 mit einer kompakten Kupplungsanordnung.

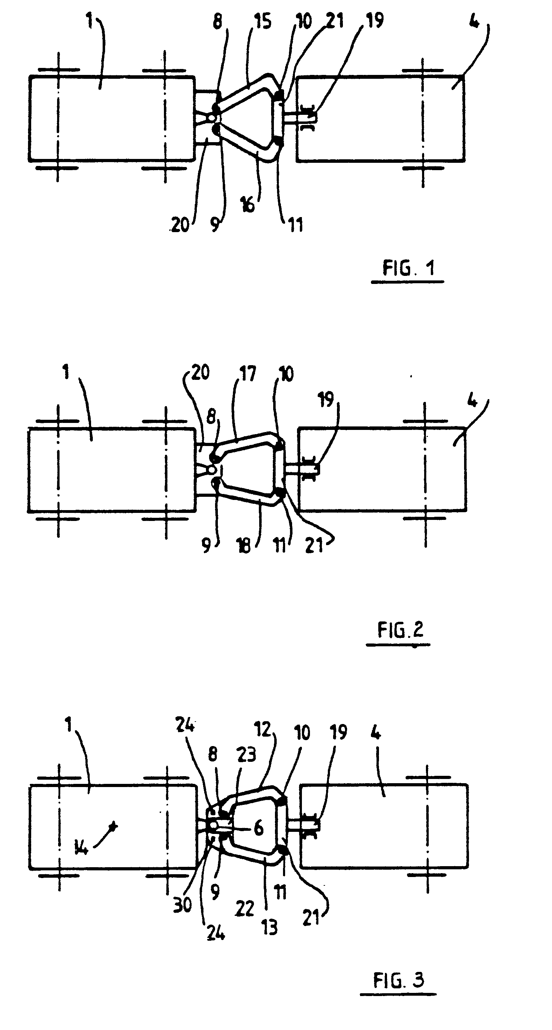

Die in Fig. 1 dargestellte Kupplungsverbindung ist in vier Gelenke 8, 9, 10, 11 aufgelöst, von denen die Gelenke 8, 9 das eine Gelenkpaar und die Gelenke 10, 11 das andere Gelenkpaar bilden. Das Gelenkpaar 8, 9 ist über den Steg 20 mit dem Zugfahrzeug 1 verbunden. Das andere Gelenkpaar 10, 11 ist direkt oder über einen Steg 21 am Anhänger 4 angeordnet. Der Abstand der Gelenke 8 und 9 ist kleiner als der Abstand der Gelenke 10, 11.

Die Gelenke 8, 10 sind über einen Lenker 15, die Gelenke 9, 11 über einen Lenker 16 miteinander verbunden. Durch die Lenker 15, 16 und die Gelenke 8 bis 11 wird eine Viergelenkkette gebildet. Der Schnittpunkt 14 der Verlängerungen der Lenker ist bei diesem Ausführungsbeispiel der effektive Kupplungspunkt. Er liegt dem Schwerpunkt des Zugfahrzeuges 1 wesentlich näher als der Ort der üblichen Kupplung. Infolgedessen sind die von der Bewegung des Anhängers 4 herrührenden dynamischen Kräfte vom Zugfahrzeug 1 wesentlich leichter mit der Anordnung gem. Fig. 1 gegenüber einer herkömmlichen Anordnung aufzufangen. Andererseits ergibt sich, daß zufolge der Viergelenkkette 8 bis 11 eine Ausweichmöglichkeit gegeben ist, durch die das Fahrverhalten des Zugfahrzeuges 1, selbst bei ungünstigen Bodenverhältnissen und hohen Geschwindigkeiten, nicht ohne weiteres auf den Anhänger 4 übertragen wird, weil durch die gelenkige Ausweichung der Lenker 15, 16 ein nicht unwesentlicher Teil dieser Beeinflussung aufgefangen wird.

Es wird nun angestrebt, den bei bekannten Gespannen noch ungenügenden Lenkeinschlag des Zugfahrzeuges 1 gegenüber dem Anhänger 4 wesentlich zu vergrößern, wobei aber der Abstand zwischen dem Zugfahrzeug 1 und dem Anhänger 4 so minimal wie möglich gehalten werden soll.

Um diesen erwünschten hohen Lenkeinschlag zu ermöglichen, ist im Beispiel der Fig. 1 vorgesehen, daß die Lenker als Winkelhebel 15, 16 ausgebildet sind, wobei die an den Gelenken 8, 9 angeschlossenen Schenkel der Winkelhebel 15, 16 größer als die an den Gelenken 10, 11 angeschlossenen Schenkel sind. Außerdem wird die konstruktive Bedingung gesetzt, daß die längeren Schenkel der Winkelhebel 15, 16 eine größere Länge als der Abstand zwischen den Gelenken 8, 9 besitzen.

Auf diese Weise wird ermöglicht, daß beim Einschlag des Zugfahrzeuges 1 gegenüber dem Anhänger 4 die Ausweichbewegung der Winkelhebel 15, 16 nicht durch die konstruktive Anordnung der Gelenke 8, 9 behindert wird.

Bei einer solchen Anordnung nach Fig. 1 sind die zwischen dem Zugfahrzeug 1 und dem Anhänger 4 erforderlichen Freiheitsgrade im Bezug auf Kurvenfahrt und Tal- und Bergfahrt gegeben, wenn davon ausgegangen wird, daß die Gelenke 8 und 9 Kugelgelenke sind. Die Gelenke 10, 11 sollten hingegen als um vertikale Achsen drehbare Lager ausgebildet sein, um die Sattellast der Anhängerdeichsel auf das Zugfahrzeug 1 übertragen zu können.

Zufolge der Viergelenkkette 8 bis 11 ist aber kein Freiheitsgrad gegeben, um eine Verwindung von Anhänger 4 und Zugfahrzeug 1 um die Längsachse des Gespannes zu ermöglichen. Aus diesem Grunde ist beim Ausführungsbeispiel der Fig. 1 vorgesehen, daß der Steg 21 für die Gelenke 10, 11 um die Längsachse des Anhängers 4 relativ verdrehbar ist, was durch die Schwenkachse 19 symbolisch dargestellt ist. Der Anhänger 4 kann sich also um diese Schwenkachse 19 aufgrund unebener Fahrbahn relativ zum Zugfahrzeug 1 verdrehen, ohne daß die Gelenke 8 bis 11 belastet werden.

In diesem Zusammenhang sei auf die Anordnung der verkehrsüblichen Auflaufbremse hingewiesen. Bei vorbekannten Anordnungen ist im Bereiche der Kupplung eine in Längsachsenrichtung zur Zuggabel bzw. Deichsel relativ bewegliche Zugstange vorgesehen, deren Relativbewegung zur Bewegung des Anhängers die Wirkung der Auflaufbremse indiziert. Diese Relativbewegung läßt sich beim Ausführungsbeispiel der Fig. 1 in den Bereich der Schwenkachse 19 verlegen, so daß es ohne weiteres möglich ist, eine dem Anhänger nähergelegene Auflaufbremse anzuordnen, ohne daß diese durch die Viergelenkkette 8 bis 13 gestört wird.

Beim Ausführungsbeispiel der Fig. 2 ist vorgesehen, daß anstelle der Winkelhebel 15, 16 gem. Fig. 1 sogenannte Sichelhebel 17, 18 vorgesehen werden, wobei in jedem Falle der Abstand der Gelenke 8, 9 zueinander kleiner als derjenige der Gelenke 10, 11 ist. Man sieht daraus, daß die Ausbildung der Lenker in mannigfacher Weise variiert werden kann.

Im Ausführungsbeispiel der Fig. 3 ist schematisch dargestellt, daß alle vier Gelenke 8 bis 11 in einer gemeinsamen Baugruppe 22 angeordnet sind, die mit dem Anhänger 4 verbunden, insbesondere über die Schwenkachse 19 relativ verdrehbar ist. In dieser Baugruppe 22 ist ein Kupplungsgehäuse 23 angeordnet, das demjenigen der verkehrsüblichen Gespannkupplungen entspricht und mit der Kugelkopfkupplung 6 des üblich ausgerüsteten Zugfahrzeuges 1 verbindbar ist. Sie weist einen dem Anhänger 4 zugeordneten Steg 21 sowie einen dem Zugfahrzeug 1 zugeordneten Steg 30 auf, die miteinander über die Gelenke 8 bis 11 und die Lenker 12, 13 verbunden sind, wobei die Gelenke 8 bis 11 als um vertikale Achse drehbare Lager ausgebildet sind, um die Sattellast des Anhängers 4 aufzunehmen.

Der Steg 30 wird über Abstützungen 24 gegenüber dem Zugfahrzeug 1 geführt, damit die Wirkung der Gelenke aufrechterhalten bleibt, weil ja die Gelenke 8, 9 über die Lenker 12, 13 und den Steg 21 mit dem Anhänger 4 verbunden sind. Diese Abstützungen 24 bewirken, daß das übliche Kupplungsgelenk 6 überbrückt wird, welches die Zug- und Druckbelastungen bei Geradeausfahrt nach wie vor aufnimmt.

Horizontales Ausknicken des Anhängers gegenüber dem Zugfahrzeug wird jedoch über die Abstützungen 24 vermieden, so daß auch in diesem Falle der effektive Kupplungspunkt 14 in Richtung zum Schwerpunkt 29 des Zugfahrzeuges 1 verlegt ist.

Eine solche Anordnung gem. Fig. 3 bietet die Möglichkeit, einen Anhänger 4 mit einer erfindungsgemäßen Kupplungsverbindung auszurüsten und diese an ein Zugfahrzeug mit üblicher Kugelkopf-Kupplung anzuschließen, wobei dort lediglich die Abstützungen 24 zusätzlich anzubringen sind.

**Patentansprüche**

1. Kupplungsverbindung zwischen einem Zugfahrzeug (1) und einem Anhänger (4), vorzugsweise Einachsanhänger, mit einer Anordnung zum Verlegen des effektiven Anlenkpunktes in Richtung zum Schwerpunkt des Zugfahrzeuges, bestehend aus zwei beidseits der Gespannlängsachse angeordneten, das Zugfahrzeug mit dem Anhänger verbindenden und eine Viergelenkkette bildenden Lenkern, deren dem Zugfahrzeug zugeordneten Gelenke (8, 9) voneinander einen geringeren Abstand als deren dem Anhänger zugeordneten Gelenke (10, 11) aufweisen, dadurch gekennzeichnet, daß die Lenker als nach außen auskragende Winkelhebel (15, 16) bzw. entsprechend gekrümmte Hebel (17, 18) ausgebildet sind.

2. Kupplungsverbindung nach Anspruch 1, dadurch gekennzeichnet, daß die zugfahrzeugseitig angelenkten Schenkel der Winkelhebel (15, 16) länger als die anhängerseitigen Schenkel ausgebildet ist, wobei die längeren Schenkel eine größere Länge als der Abstand zwischen den zugfahrzeugseitigen Gelenken (8, 9) besitzen.

**Claims**

1. A coupling connection between a traction vehicle (1) and a trailer (4), preferably a two-wheel trailer, comprising a device for displacing the effective pivoting point towards the centre of gravity of the traction vehicle, the connection comprising two guide rods disposed on either side of the longitudinal axis of the yoke or connecting means, joining the traction vehicle to the trailer and forming a four-bar chain, in which the joints (8, 9) associated with the traction vehicle are at a shorter distance from one another than the joints (10, 11) associated with the trailer, characterised in that the guide rods are in the form of outwardly projecting toggle levers (15, 16) or correspondingly bent levers (17, 18).

2. A coupling connection according to claim 1, characterised in that the limbs of the toggle levers (15, 16) pivoted on the side of the traction vehicle are longer than the limbs on the trailer side, the longer limbs having a length greater than the distance between the joints (8, 9) on the side of the traction vehicle.

**Revendications**

1. Attelage monté entre un véhicule tracteur (1) et une remorque (4), de préférence une remorque à un essieu, comportant un dispositif pour déplacer le point effectif d'articulation en direction du centre de gravité du véhicule tracteur et constitué par deux bras articulés disposés des deux côtés de l'axe longitudinal du train formé du véhicule tracteur et de la remorque et reliant le véhicule tracteur à la remorque et constituant une chaîne à quatre articulations et dont les articulations (8, 9) associées au véhicule tracteur font une distance réciproque plus faible que celle séparant les articulations (10, 11) associées à la remorque, caractérisé par le fait que les bras articulés sont réalisés sous la forme de leviers coudés (15, 16) saillant vers l'extérieur ou sous la forme de leviers (17, 18) recourbés de façon correspondante.

2. Attelage suivant la revendication 1, caractérisé par le fait que les branches, articulées du côté du véhicule tracteur, des leviers coudés (15, 16) sont plus longues que les branches situées du côté de la remorque, les branches les plus longues possédant une longueur supérieure à la distance entre les articulations (8, 9) situées du côté du véhicule tracteur.

FIG. 1

FIG. 2

FIG. 3